# EUROPÄISCHE PATENTANMELDUNG

(11) **EP 4 230 463 A1**
(43) Veröffentlichungstag der Anmeldung: **23.08.2023**
(21) Anmeldenummer: 23155806.5
(22) Anmeldetag: 09.02.2023
(51) Int. Cl.: B60L 1/00, B60L 9/22, B60L 9/28, B60L 9/30, B60L 15/38, B60L 15/42, B60L 50/40, B60L 50/61, B60L 50/70, B60W 20/00, B61C 3/02, B61C 7/04, E01B 27/00

(54) **GLEISFAHRBARE, SELBSTFAHRENDE ENERGIEVERSORGUNGSMASCHINE**

(30) Priorität: 18.02.2022 AT 501102022
(71) Anmelder: HP3 Real GmbH, 1130 Wien (AT)
(72) Erfinder: Lichtberger, Bernhard, 1030 Wien (AT); Hofer, Hansjörg, 4502 St. Marien (AT)
(74) Vertreter: Hübscher & Partner Patentanwälte GmbH

(57) **Zusammenfassung**

Es wird eine gleisfahrbare, selbstfahrende Energieversorgungsmaschine (40) zum Versorgen von gleisfahrbaren Bahnbaumaschinen (1, 8) mit Energie beschrieben. Um Bahnbaumaschinen vollständig mit externer Energie versorgen zu können wird vorgeschlagen, dass der Maschinenrahmen (39) mit wenigstens einer zwischen beiden Energieversorgungsmaschinenenden verlaufenden Gleichstromzwischenkreisschiene (48) ausgestattet ist, die zwecks Aufbaus eines Gleichstromzwischenkreises über einen Stromabnehmer (38) an ein Oberleitungsnetz (39) anschließbar ist und an welche Gleichstromzwischenkreisschiene (48) die Energiequelle angeschlossen ist, wobei an die Energieversorgungsmaschine (40) gekuppelte gleisfahrbare Bahnbaumaschinen (1, 8) ebenfalls mit wenigstens einer zwischen beiden Bahnbaumaschinenenden verlaufenden Gleichstromzwischenkreisschiene (48) ausgestattet sind und die Gleichstromzwischenkreisschienen (48) von Energieversorgungsmaschine (40) und Bahnbaumaschinen (1, 8) über elektrische Kupplungen aneinander angeschlossen sind, wobei ein Arbeitshydraulikkreis (P) der Bahnbaumaschine (1) einen Elektromotor (41) mit Pumpe umfasst und wobei die Energieversorgungsmaschine (40) die Bahnbaumaschine (1) im Zuge von Bahnbauarbeiten vollständig mit Energie versorgt und diese betreibt.

## Beschreibung

Die Erfindung bezieht sich eine Gleisfahrbare, selbstfahrende Energieversorgungsmaschine zum Versorgen von gleisfahrbaren Bahnbaumaschinen mit Energie, umfassend einen auf Schienenfahrwerken abgestützten, wenigstens eine Energiequelle tragenden Maschinenrahmen, der mit wenigstens einer zwischen beiden Energieversorgungsmaschinenenden verlaufenden Gleichstromzwischenkreisschiene ausgestattet ist, die zwecks Aufbaus eines Gleichstromzwischenkreises über einen Stromabnehmer an ein Oberleitungsnetz anschließbar ist und an welche Gleichstromzwischenkreisschiene die Energiequelle angeschlossen ist.

Derartige Energieversorgungsmaschinen für Personenzüge offenbaren beispielsweise die EP 2423066 A2, die DE 102014219800 A1 und die EP 3300982 A1. Damit soll insbesondere die Energieversorgung von Zugwagen verbessert werden (EP 3300982 A1) bzw. für eine Verringerung des Kraftmaschinenlärms an Bahnsteigen (DE 102014219800 A1) gesorgt werden, ohne die Kraftmaschinenleistung zu beschränken, die für den Antrieb des Zuges nötig ist, was insbesondere durch eine Reduzierung des Energieverbrauchs von Zusatzeinrichtungen in Bahnhöfen erreicht wird. Die Lehre der EP 2423066 A2 offenbart einen Zug, in dem mehrere Wagen mit unterschiedlichen elektrischen Bordkomponenten aneinandergekoppelt sind. Ein Wagen umfasst eine Stromerzeugungsvorrichtung, ein Fahrzeug ist mit einem Oberleitungsanschluss ausgestattet, ein Wagen ist mit einer Antriebsvorrichtung ausgestattet, ein ist Wagen mit einer Hilfsstromversorgungsvorrichtung zur Stromversorgung der Bordgeräte ausgestattet, ein ist Wagen mit einer Generatorvorrichtung zur Stromversorgung des Zuges im Notfall ausgestattet und ein Waggon ist mit Energiespeichermitteln ausgestattet.

Bahnbaumaschinen, insbesondere Oberbaumaschinen, werden zum Neubau, Umbau und zur Instandhaltung der Gleise, des Planums und der Oberleitung gebaut und eingesetzt. Überwiegend werden die Bahnbaumaschinen mit einem dieselhydraulischen oder dieselmechanischen Antriebskonzept gebaut. Ein Dieselmotor treibt ein hydrodynamisches Getriebe mit mehreren Abgängen an. Einerseits werden über Kardanwellen vom Getriebe aus direkt die Achsgetriebe angetrieben, andererseits werden an den Abgängen des Getriebes Hydraulikpumpen angeschlossen die einen Hydraulikkreis betreiben. Durch diesen Hydraulikkreis werden zusätzlich hydrostatische Achsantriebe zum Fahren der Maschine eingesetzt und die Arbeitsaggregate versorgt. Arbeitsaggregate können Stopfaggregate, Hebe-Richtaggregate, Antriebsmotoren für Reinigungsketten, Hydraulikzylinder zur Positionierung der Förderketten, Antriebe für Förderbänder oder Hebebühnen, Spanntrommeln für ab- oder aufzuwickelnde Fahrdrähte und andere sein. Als Antriebsstrang werden auch mechanische Schaltgetriebe verwendet die mit dem Dieselmotor mechanisch verbunden werden. Der Dieselmotor treibt auch ein Verteilgetriebe an, welches mehrere Hydraulikpumpen an den Abgängen vorsieht, die ihrerseits wieder die Arbeitsaggregatkreise antreiben. Es gibt Ausführungen, bei denen der Fahrantrieb nur hydrostatisch erfolgt. Dabei treibt der Dieselmotor über eine Verteilgetriebe die hydraulischen Pumpen für die Arbeitskreise und die Hydraulikpumpen für den hydrostatischen Fahrantrieb an.

Die Lebensdauer von Bahnbaumaschinen beträgt mindestens 18-20 Jahre. Das bedeutet, das viele der vorhandenen Bahnbaumaschinen noch eine lange Lebensdauer vor sich haben und dabei enorme Mengen an fossilen Treibstoffen verbrennen und analog dazu eine entsprechend große Menge an CO2 produzieren werden. Der vorzeitige Ersatz dieser Maschinen durch umweltfreundlichere ist wirtschaftlich äußerst unökonomisch. Zum anderen ist der Umbau der Maschinen auf eine ökologisch nachhaltige Energieversorgung aus Platzgründen auf und in der Maschine und technischen Randbedingungen schwer bis praktisch kaum realisierbar. Im Zuge der Bekämpfung des Klimawandels unternimmt die internationale Staatengemeinschaft und insbesondere die europäische Union große Anstrengungen im Kampf gegen den Klimawandel, um die CO2-Emissionen einzuschränken. Eine nachhaltige Lösung einer umweltfreundlichen und CO2-armen Energiebereitstellung für neu zu bauende bzw. vorhandene Maschinen mit altem Energieversorgungskonzept ist daher äußerst wünschenswert.

Dazu bieten sich als Stand der Technik die folgenden Möglichkeiten an. Weist ein Land einen hohen Anteil an elektrifizierten Strecken auf, dann kann die Energie für den Betrieb der Maschinen über die Oberleitung erfolgen. Dazu ist der Aufbau eines Stromabnehmers, eines Hochspannungstrafos mit nachfolgender Gleichrichtung der Wechselspannung über zum Beispiel 4-Quadranten-Wandler notwendig. Über die erzeugte Gleichspannung kann dann über Traktionsumrichter Drehstromspannung zum Betrieb der Asynchronmotoren erzeugt werden. Über Wechselrichter können auch die anderen Hilfsspannungen für den Betrieb anderer Geräte wie Computer, Luftkompressoren, Klimaanlagen, Beleuchtung, Ventile, Steuerungen etc. erzeugt werden.

Für nicht elektrifizierte Strecken oder Baustellen, bei denen eine Abschaltung der Oberleitung notwendig ist, reicht die Energieversorgung der Bahnbaumaschinen so nicht aus. Zusätzlich aufgebaute elektrische Akkumulatoren und Superkondensatoren könnten für diese Phasen kurzfristig die Energie bereitstellen. Ihr Einsatz ist generell günstig, weil sie bei starken Leistungsschwankungen, wie zum Beispiel bei Stopfmaschinen die zyklisch von Schwelle zu Schwelle vorfahren, die Spannungsspitzen ausgleichen. Allerdings dauern Schichten von Bahnbaumaschinen in der Regel 8 Stunden. Oft, bei größeren Baustellen werden mehrere Schichten durchgehend hintereinandergefahren. Batterien können bei Bahnbaumaschinen daher allenfalls für kürzere Zeit Energie zur Verfügung stellen, dienen also nur einer kurzzeitigen Überbrückung eines Energieausfalls.

Neben Batteriezügen, die im Nahverkehr für kürzere Strecken gedacht sind und an den Bahnhöfen über Schnellladevorrichtungen verfügen, gibt es mittlerweile auch Ausführungen die mit Wasserstoffbrennstoffzellen betrieben werden. Brennstoffzellen erzeugen durch einen Verbrennungsvorgang von Wasserstoff mit Sauerstoff elektrischen Strom. Der große Vorteil dieser Technologie und ihre besondere Eignung für Bahnbaumaschinen ist der Umstand, dass die Betriebsdauer im Wesentlichen nur von der Größe der Wasserstofftanks abhängt, die auf der Maschine aufgebaut sind. Damit kann die Oberbaumaschine längere Zeit und mehrere Schichten durchgehend ohne Auftanken oder einen Ladevorgang betrieben werden. Nachteilig an der Wasserstofftechnologie ist derzeit noch, dass der Wasserstoff selbst überwiegend noch nicht aus nachhaltigen Technologien gewonnen wird und dass die Versorgung mit Wasserstoff über Bahntankstellen oder Zulieferer noch nicht ausreichend und umfassend vorhanden ist.

Als Übergangslösung kommt daher die Ergänzung der Energieversorgung über einen Dieselmotor mit nachgeschaltetem Elektrogenerator in Frage. Der Dieselmotor kann auch durch einen Wasserstoffmotor ersetzt werden. Dieser verbrennt Wasserstoff und erzeugt kein CO2, hat aber gegenüber den Brennstoffzellen den Nachteil durch die Verbrennung der Luft Stickoxide zu erzeugen.

Es sind mittlerweile Bahnbaumaschinen bekannt, die dieselelektrische Antriebskonzepte realisieren. Diese Antriebskonzepte sind bisher nur bei neu gebauten Maschinen verwirklicht worden. Aus AT517558 ist eine Bahnbaumaschine bzw. Gleisbaumaschine bekannt, bei der ein Verbrennungsmotor mit einer Antriebswelle mechanisch mit einer elektrischen Generator/Motoreinheit verbunden ist. Der mechanische Antrieb ist dabei über ein Verteilgetriebe mit einer Hydraulikpumpe verbunden. Ein Stromspeicher ist mit der Generator- Motoreinheit verbunden. Dies ermöglicht die elektrische Versorgung der Antriebe. Das ergibt eine geringe Einsparung an fossiler Energie, die sich vorwiegend aus den besseren Wirkungsgraden elektrischer Antriebe ergibt.

WO2017/050414 zeigt eine Maschine mit Dieselmotor, der über eine Kupplung mit einem Verteilgetriebe gekuppelt, verbunden werden kann, an welches Hydraulikpumpen zur Versorgung eines Hydrauliksystems angeschlossen sind. Es wird ein Verfahren für den Betrieb eines Energieversorgungssystems zum Antrieb diverser Arbeitsaggregate und Antriebe einer Gleisbaumaschine beschrieben, welches die Energie aus der elektrischen Oberleitung bezieht. Dabei kann statt des Dieselmotors ein Elektromotor zum Antrieb des Verteilgetriebes eingekuppelt werden. Zusätzlich wird der Gleichstromzwischenkreis durch Akkumulatoren gepuffert. Der Dieselmotor kann dabei auch den Elektromotor in generatorischem Betrieb zur Ladung der Batterien antreiben.

AT521412 beschreibt ein Schienenfahrzeug, welches an einer der Achsen einen elektrischen Antriebsmotor hat der auch generatorisch betrieben werden kann. Wenn das Fahrzeug gezogen wird, dann wird er Motor generatorisch betrieben und kann über einen Stromwandler einen Gleichstromzwischenkreis versorgen. An den Gleichstromzwischenkreis ist ein Energiespeicher angeschlossen. Über einen weiteren Stromwandler der an den Gleichstromzwischenkreis angeschlossen ist wird ein Elektromotor angetrieben der über ein Verteilgetriebe Hydraulikpumpen oder ein Arbeitsaggregat antreibt. Das Patent beschreibt also ein Fahrzeug welches gezogen elektrische Energie über den Achsgenerator erzeugt. Fossile Energie würde in diesem Falle eingespart, wenn das Zugfahrzeug beispielsweise eine Elektrolokomotive ist. Es ergibt sich allerdings die Einschränkung, dass dies nur auf elektrifizierten und aktiv versorgten Strecken möglich wäre.

Messwagen mit vier Laufrädern und mit einer inertialen Navigationseinheit sind beispielsweise aus der EP3584366A1 bekannt. Dabei sind jeweils zwei Räder einer Seite miteinander verbunden und diese zueinander verdrehbar. Zudem ist der Messwagen an einem Rahmen einer Gleisbaumaschine angelenkt.

Das bekannte European Train Control Systems (ETCS) ist grundlegender Bestandteil eines zukünftigen einheitlichen Eisenbahnverkehrsleitsystems ERTMS. Auf Bahnbaumaschinen ist es bislang noch nicht aufgebaut. Bahnbaumaschinen sind heute vorwiegend mit nationalen Sicherheitseinrichtungen wie dem INDUSI-System ausgerüstet. Die nachträgliche Ausrüstung von vorhandenen Bahnbaumaschinen mit ETCS ist schwierig bis unmöglich. Einerseits erfordert das System den Einbau von Empfangsantennen, einem ETCS-Fahrzeuggerät mit großem Elektronikschrank (EVC European Vital Computer) und unterbrechungsfreier Stromversorgung. Dafür ist erheblicher Platz notwendig, der auf herkömmlichen Bahnbaumaschinen nicht vorgesehen ist. Dazu kommt die aufwendige und kostspielige Zulassung des ETCS-Systems. Die Zulassung wäre für jede Maschinentype getrennt mit hohem Kostenaufwand durchzuführen.

Der Erfindung liegt die Aufgabe zugrunde, die oben angeführten Nachteile zu vermeiden und eine modulare Lösung vorzustellen, die sowohl für neu gebaute Bahnbaumaschinen als auch zur Umrüstung vorhandener Bahnbaumaschinen mit fossilem Antrieb genutzt werden kann. Die Erfindung soll dabei auf möglichst nachhaltigen ökologisch vorteilhaften CO2-armen Energiebereitstellungstechnologien beruhen.

Die Erfindung löst die gestellte Aufgabe durch eine an die Energieversorgungsmaschine gekuppelte gleisfahrbare Bahnbaumaschine, die ebenfalls mit wenigstens einer zwischen beiden Bahnbaumaschinenenden verlaufenden Gleichstromzwischenkreisschiene ausgestattet ist, wobei die Gleichstromzwischenkreisschienen von Energieversorgungsmaschine und Bahnbaumaschine über elektrische Kupplungen aneinander angeschlossen sind, wobei ein Arbeitshydraulikkreis der Bahnbaumaschine einen Elektromotor mit Pumpe umfasst und wobei die Energieversorgungsmaschine die Bahnbaumaschine im Zuge von Bahnbauarbeiten vollständig mit Energie versorgt und diese betreibt. Vorteilhafte Weiterbildungen der Erfindung sind in den Unteransprüchen dargestellt.

Die Erfindung betrifft somit eine Vorrichtung zur Gleisbearbeitung mit einer gleisfahrbaren, selbstfahrenden Energieversorgungsmaschine und mit einer gleisfahrbaren Bahnbaumaschine, welche an die Energieversorgungsmaschine gekuppelt ist.

Erfindungsgemäß ist eine unabhängig auf Gleisen verfahrbare elektrische Energieversorgungsmaschine vorgesehen, die über die Gleichstromzwischenkreisschiene an entsprechend adaptierte vorhandene oder neue Bahnbaumaschinen je nach Bedarf vorne oder hinten angekoppelt wird, wozu die Gleichstromzwischenkreisschiene zwischen beiden Energieversorgungsmaschinenenden verläuft. Bei vorhandenen, von einer erfindungsgemäßen Energieversorgungsmaschine mit Energie versorgten Bahnbaumaschine wird der Dieselmotor durch einen über Wechselrichter von einem vom Gleichstromzwischenkreis über die Gleichstromzwischenkreisschiene angetriebenen Elektromotor ersetzt. An Stelle des Dieselmotors treibt der Elektromotor das Verteilgetriebe an und versorgt damit vorhandene hydraulische Arbeits- und Antriebskreise. Der Elektromotor kann aber auch direkt an die Hydraulikpumpe angeschlossen sein. Da die Energieversorgungsmaschine über einen eigenen Fahrantrieb verfügt, können die Fahrantriebe an der Arbeitsmaschine gegebenenfalls abgeschaltet bzw. abgebaut und außer Betrieb genommen werden. Über ein Steuerungssystem kommuniziert die Energieversorgungsmaschine mit der Arbeitsmaschine. Der Energieversorgungsmaschinenteil kann in beide Richtungen fahren und an die Arbeitsmaschine gekuppelt werden. Damit ergibt sich der Vorteil, dass die Energieversorgungsmaschine auch für verschiedenste Bahnbaumaschinen verwendet oder als unabhängiges Zugfahrzeug werden kann. Wird eine ältere Bahnbaumaschine entsorgt, dann kann die Leistungsversorgungsmaschine eine andere Bahnbaumaschine versorgen. Das System ist modular aufgebaut, sie kann mit einem Dieselmotor ausgestattet sein, mit Energiespeichern, mit einem Wasserstoffmotor oder mit Brennstoffzellen. Das Konzept ist so aufgebaut, dass es für Bahnbaumaschinen unterschiedlichster Hersteller geeignet ist.

Die Energie kann sowohl über Stromabnehmer vom vorhandenen Bahnnetz bezogen werden als auch von der zusätzlichen Energiequelle, beispielsweise einem Dieselmotor der einen Elektrogenerator betreibt. An Stelle des Dieselmotors kann ein Wasserstoffverbrennungsmotor eingesetzt werden. Dieselmotor oder Wasserstoffverbrennungsmotor können durch Wasserstoffbrennstoffzellen ersetzt werden, die direkt in den Gleichstromzwischenkreis einspeisen. Parallel zum Gleichstromzwischenkreis können Energiespeicher in Form von Akkumulatoren und Superkondensatoren geschaltet werden.

In der Stromleitung zwischen Stromabnehmer und Gleichstromzwischenkreisschiene sind vorzugsweise ein Pantograph, ein Hauptschalter, ein Gebührenzähler ein Transformator und ein Hochstromwechselrichter vorgesehen. Der Hochstromwechselrichter kann als 4-Quadrantensteller ausgeführt sein. Fahrantriebe von Energieversorgungsmaschine und/oder Bahnbaumaschine umfassend Traktionsumrichter und Elektromotoren, die vorzugsweise direkt in Achsgetriebe eintreiben, sind vorzugsweise an die jeweils zugeordnete Gleichstromzwischenkreisschiene von Energieversorgungsmaschine bzw. Bahnbaumaschine angeschlossen.

Zudem ist es von Vorteil, wenn an die Gleichstromzwischenkreisschiene ein elektrischer Energiespeicher, beispielsweise mindestens ein Superkondensator, angeschlossen ist um Leistungsspitzen im Gleichstromzwischenkreis abfangen zu können.

Über der Energieversorgungsmaschine und/oder der Bahnbaumaschine zugeordnete und an die jeweils zugeordnete Gleichstromzwischenkreisschiene von Energieversorgungsmaschine bzw. Bahnbaumaschine angeschlossene Wechselrichter kann ein Drehstromanschluss bereitgestellt sein, an den diverse Drehstromverbraucher angeschlossen sind.

An die Gleichstromzwischenkreisschiene der Bahnbaumaschine ist vorzugsweise ein über einen Wechselrichter angetriebener Drehstrommotor angeschlossen, der mindestens eine Hydraulikpumpe zur Versorgung der Bahnbaumaschine mit Hydraulikdruck bzw. Hydraulikenergie umfasst.

Die Energiequelle kann einen Dieselmotor und einen Elektrogenerator umfassen, der über einen Hochstromwechselrichter an die Gleichstromzwischenkreisschiene angeschlossen ist. Die Energiequelle kann auch einen Wasserstoffverbrennungsmotor und einen Elektrogenerator umfassen, der über einen Hochstromwechselrichter an die Gleichstromzwischenkreisschiene angeschlossen ist. Darüber hinaus kann die Energiequelle auch Wasserstoffbrennstoffzellen umfassen, die an die Gleichstromzwischenkreisschiene angeschlossen sind.

Steuerungscomputer von Energieversorgungsmaschine und Bahnbaumaschine sind zur gegenseitigen Kommunikation vorzugsweise über eine Kommunikationsleitung aneinander angeschlossen, um Antriebe und Energieversorgung abzugleichen.

An die Gleichstromzwischenkreisschiene von Energieversorgungsmaschine und/oder Bahnbaumaschine können Wechselrichter zur Erzeugung von Hilfsgleichspannungen angeschlossen sein um diverse Gleichstromverbraucher mit Energie versorgen zu können.

Zum elektrischen Anschluss von diversen Verbrauchern kann analog zur Gleichstromzwischenkreisschiene zwischen beiden Energieversorgungsmaschinenenden und beiden Bahnbaumaschinenenden je wenigstens eine Drehstromschiene verlaufen, die über elektrische Kupplungen aneinander angeschlossen sind.

Die gleisfahrbare Energieversorgungsmaschine weist vorzugsweise eine vordere und eine hintere Fahrkabine auf und ist als Zugfahrzeug in beide Richtungen fahrend betreibbar.

Die Gleichstromzwischenkreisschiene, die Drehstromversorgungsschiene und die Kommunikationsleitungen von Energieversorgungsmaschine und Bahnbaumaschine sind insbesondere über Kupplungen aneinander angeschlossen.

Die Energieversorgungsmaschine versorgt die Bahnbaumaschine im Zuge von Bahnbauarbeiten vollständig mit Energie und betreibt diese.

Ist die gleisfahrbare, selbstfahrende Energieversorgungsmaschine mit einem inertialen Messsystem und/oder einem gleisfahrbaren Messwagen ausgestattet, dann kann ein Gleis in einfacher Weise zugleich mit Gleisbauarbeiten vermessen werden. Die ist insbesondre von Interesse, wenn aus Messsysteme an der Bahnbaumaschine aus Platzgründen nicht mehr nachgerüstet werden können.

Von besonderem Vorteil ist es, wenn die gleisfahrbare Energieversorgungsmaschine mit einem ETCS-System ausgestattet ist. Erfindungsgemäß würde das ETCS-System auf der Energieversorgungsmaschine aufgebaut, welches auch die Zulassung bewirken würde. Die Bahnbaumaschine benötigt dann selbst kein ETCS-System und somit auch keine gesonderte Zulassung. An einer auf das neue System umzurüstenden alten Bahnbaumaschine wäre daher nur der Führerstand umzurüsten, wozu der bestehende Führerstand nur mit den entsprechenden Instrumenten, im Wesentlichen einem Display, ausgerüstet werden muss. Zusätzlich wird an der alten Bahnbaumaschine Unterflur eine ETCS-Antenne aufgebaut. Die Kupplung des Systems zur Versorgungsmaschine erfolgt dann über eine elektrische Signalverbindung. Vorteilhaft sind die einmaligen Zulassungskosten und Aufwände für das ETCS-System auf der Energieversorgungsmaschine. Damit können die langlebigen vorhandenen Bahnbaumaschinen, insbesondere Gleisstopfmaschinen mit Heberichtaggregaten, ETCS nachträglich mit ausgestattet werden. Der große Vorteil ist, dass die Maschinen damit grenzübergreifend fahren und arbeiten können. Derzeit müssen dafür je nach Land verschiedene Zugsicherungssysteme aufgebaut werden.

Mit einem Rtk-GPS System ausgestattet kann die Bahnbaumaschine von der Energieversorgungsmaschine automatisch exakt zur Baustelle geführt werden. Während der Arbeit ist die automatische Synchronisierung der Maschine möglich. Zudem kann auch eine absolute Gleisgeometrievermessung in Verbindung mit einem aufgebauten IMU-Messwagen vorgesehen sein. Die Maschine kann zur Bahnsteigvermessung mit wenigstens einem Laserscanner ausgestattet sein. Ebenfalls kann ein Scanner zum Vermessen der Geometrie einer Schotterbettung vorgesehen sein. Dies ist insbesondere vorteilhaft, wenn die Bahnbaumaschine eine Schotterverteil- und Planiermaschine ist.

Die Bahnbaumaschine kann folgende Funktionen aufweisen. Einen dynamischen Gleisstabilisator, einen Inertialen Navigationsmesswagen, um ein Abnahmemesssystem zu integrieren sowie eine Fräs- bzw. Polier-Schleifeinheit zum Bearbeiten bzw. wiederherstellen der Schienengeometrie.

In der Zeichnung ist der Erfindungsgegenstand beispielsweise schematisch dargestellt. Es zeigen
- Fig. 1: eine Bahnbaumaschine gemäß dem Stand der Technik in Seitenansicht,
- Fig. 2: eine weitere Bahnbaumaschine gemäß dem Stand der Technik in Seitenansicht,
- Fig. 3: eine erfindungsgemäße Energieversorgungsmaschine in Seitenansicht,
- Fig. 4: eine weitere erfindungsgemäße Energieversorgungsmaschine in Seitenansicht,
- Fig. 5: eine Energieversorgungsmaschine mit angekuppelter Bahnbaumaschine in Seitenansicht,
- Fig. 6: eine Energieversorgungsmaschine mit zwei angekuppelten Bahnbaumaschinen in Seitenansicht,
- Fig. 7: ein Schaltbild einer Energieversorgungsmaschine und
- Fig. 8: ein alternatives Schaltbild einer Energieversorgungsmaschine.

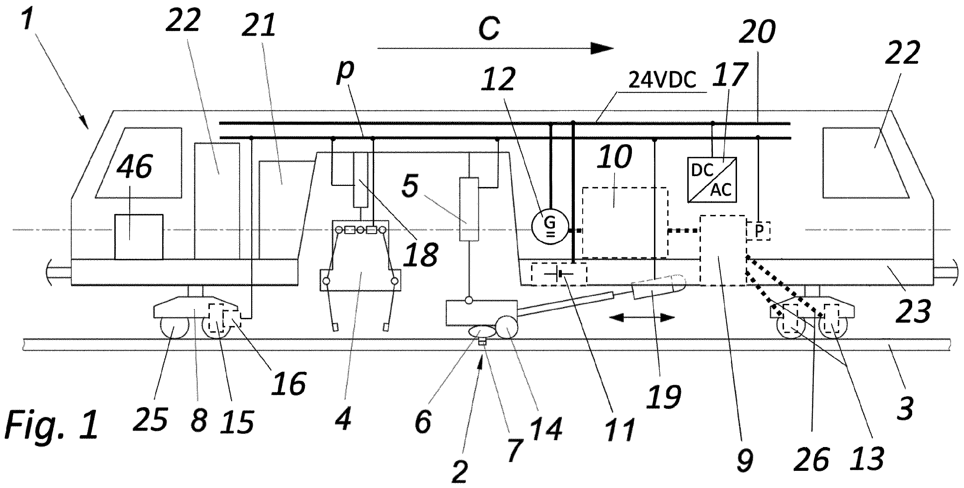

Fig. 1 zeigt beispielhaft für bekannte Bahnbaumaschinen eine gleisfahrbare Bahnbaumaschinen 1, insbesondere eine Stopfmaschine, auf Eisenbahnachsen 25, mit einem Maschinenrahmen 23, mit zwei Fahrkabinen 22 und einer Arbeitskabine 21. Die Arbeitsrichtung ist mit C angegeben. Über den Dieselmotor 10 wird ein hydrodynamisches Getriebe 9 mit einer Pumpe 20 angetrieben. Die Pumpe 20 erzeugt einen Hydraulikkreis an den verschiedenen Aktoren wie der Hebe-Senkzylinder 18 des Stopfaggregates, die vollhydraulischen Stopfantriebe des Stopfaggregates 4, der Hebezylinder 5 des Hebe-Richt-Aggregates 2 und der Verschiebezylinder des Aggregates 19 angeschlossen sind. Die Maschine ist mit Drehgestellen 8 und Eisenbahnachsen 25 ausgestattet. Zur Erhöhung der Antriebskraft ist eine der Achsen mit einem hydrostatischen Fahrmotor 16 der auf das Achsgetriebe 15 wirkt ausgestattet. Vom hydrodynamischen Schaltgetriebe werden die Achsgetriebe 13 von zwei Achsen direkt mit dem Schaltgetriebe mechanisch verbundenen Kardanwellen 26 angetrieben. Über eine Lichtmaschine 12, die an den Dieselmotor 10 angeflanscht ist, wird die Bordgleichspannung von 24VDC erzeugt. Parallel zur Lichtmaschine ist eine Batterie 11 geschaltet. Über einen DC/AC Wandler 17 werden 220VAC erzeugt, um verschiedene Geräte, wie z. B. Computer und Bildschirme, mit Energie zu versorgen. Die Bahnbaumaschine kann mit Stützbatterien bzw. Notstromaggregaten ausgestattet sein, um die Rechner bei abgekuppelter Energieversorgungsmaschine betreiben zu können. Über einen Steuerungscomputer 46 werden sowohl Fahrantriebe, Bremsen und die Arbeitselektronik angesteuert und geregelt. Der verfügbare Raum auf solchen Maschinen ist begrenzt, weshalb der Umbau auf eine alternative Energieversorgung praktisch unmöglich ist. Einfache Ausführungen wie diese Bahnbaumaschine mit ähnlichem Energieversorgungsprinzip sind sehr häufig in der Praxis anzutreffen. Das Antriebsprinzip ist für Schotterplaniermaschine, Oberleitungsfahrzeuge, Gleismesswagen, Schleifmaschinen, Dynamische Gleisstabilisatoren, Material-Förder-Siloeinheiten etc. zum Beispiel häufig das gleiche.

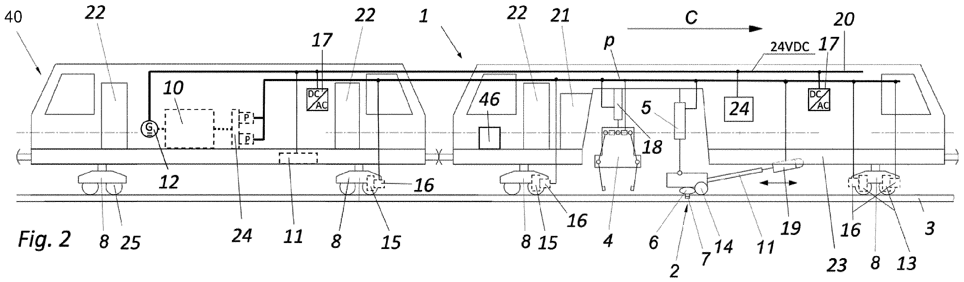

In Fig. 2 ist eine andere bekannte Ausführung von Bahnbaumaschinen 1 zu sehen. Manche Bahnverwaltungen und Kunden fordern Achslasten die deutlich unter den grundsätzlich in Europa zulässigen 22,5 Tonnen liegen. Das ist mit Bahnbaumaschinen oftmals schwer einzuhalten. Daher wird die Leistungsversorgung Dieselmotor 10, Verteilgetriebe 24, Hydraulikpumpen P, Hydrauliktank und Dieseltank zur Gewichtsentlastung der Hauptmaschine 1 auf einen Anhänger verlagert. Dieser dient oft zum Aufbau zusätzlicher Arbeitsaggregate wie z. B. eines Dynamischen Gleisstabilisators, einer Kehrbürste mit Steilförderband und Silo, einer Pflugvorrichtung oder eines Zwischenfachverdichters. Die Bordstromversorgung mit 24VDC wird ebenfalls auf dem Anhänger über eine Lichtmaschine 12 mit parallel geschalteter Batterie 11 erzeugt. Über DC/AC-Wandler 17 werden 220VAC erzeugt die Geräte mit Netzspannung versorgen. Ventile, Anzeigen, Endschalter 24 und andere Verbraucher werden an die 24VDC-Schiene angeschlossen und so mit Energie versorgt. Über einen Steuerungscomputer 46 werden sowohl Fahrantriebe, Bremsen und die Arbeitselektronik angesteuert und geregelt. Häufig erfolgt der Fahrantrieb dieser Maschinen auf hydrostatischem Weg. Einige Achsen sind mit Achsgetrieben 13, 15 versehen, die mit Hydraulikmotoren 16 angetrieben werden. Wie dem Schema entnommen werden kann, werden beispielhaft (aber in der Praxis häufig anzutreffen) bei der gezeigten Maschine 1 die in Arbeitsrichtung C vorderen beiden Achsen angetrieben. Das bedeutet, dass vom Verteilgetriebe 24 über die angetriebenen Pumpen P lange Hydraulikversorgungsleitungen nach vorne über die Kuppelstellen der Bahnbaumaschinen 1 geführt werden müssen. Das hat den Nachteil, dass die Ansprechzeit der Antriebe durch den Fortpflanzungsimpuls und die Dehnung der Schläuche verlangsamt wird. Das ist insbesondere beim Arbeiten von Schwelle zu Schwelle, wenn eine schnelle Reaktion der Maschine für die Arbeitsleistung bestimmend ist, von Nachteil. Ein weiterer Nachteil hydraulischer Antriebe ist, das austretende Öl bei einem Defekt. Die Fahrantriebe 16 werden typisch mit Drücken bis zu 350bar gefahren, was bei einem Defekt den Hydraulikölverlust großer Mengen bedeutet. Üblicherweise weisen die Anhänger zu wenig Platz für den Aufbau eines alternativen, nachhaltigen Antriebs auf. Ein Aufbau auf der Hauptmaschine 1 ist hingegen aus Gewichtsgründen unmöglich.

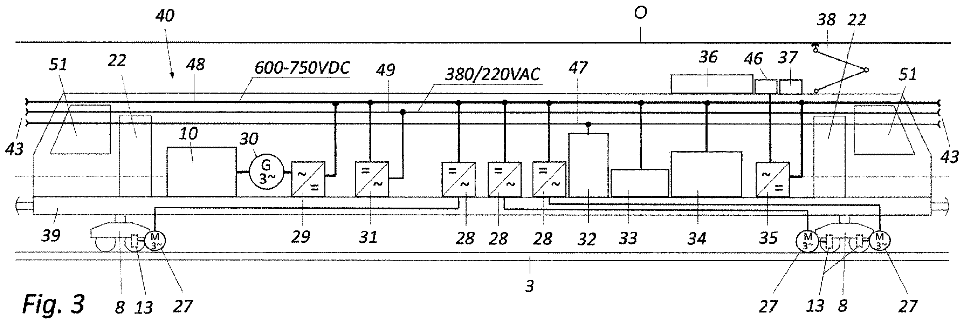

Fig. 3 zeigt eine erfindungsgemäße gleisfahrbare, selbstfahrende Energieversorgungsmaschine 40 zum Versorgen von gleisfahrbaren Bahnbaumaschinen 1 mit Energie, umfassend einen auf Schienenfahrwerken 8 abgestützten, wenigstens eine Energiequelle tragenden Maschinenrahmen 39. Die Energieversorgungsmaschine 40 weist zwei Kabinen 22 auf und kann in beide Fahrtrichtungen betrieben und an andere Bahnbaumaschinen gekuppelt werden. Sie ist so ausgeführt, dass sie als Einzelfahrzeug betrieben werden kann.

Der Maschinenrahmen 39 ist mit wenigstens einer zwischen beiden Energieversorgungsmaschinenenden verlaufenden Gleichstromzwischenkreisschiene 48 ausgestattet, die zwecks Aufbaus eines Gleichstromzwischenkreises über einen Stromabnehmer 38 an ein Oberleitungsnetz O anschließbar ist und an welche Gleichstromzwischenkreisschiene 48 die Energiequelle angeschlossen ist. Eine an die Energieversorgungsmaschine 40 gekuppelte gleisfahrbare Bahnbaumaschine 1 ist ebenfalls mit wenigstens einer zwischen beiden Bahnbaumaschinenenden verlaufenden Gleichstromzwischenkreisschiene 48 ausgestattet und die Gleichstromzwischenkreisschienen 48 von Energieversorgungsmaschine 40 und Bahnbaumaschine 1 sind über elektrische Kupplungen aneinander angeschlossen.

Die Energieversorgungsmaschine 40 versorgt über Kupplungen 43 die an den Enden der Energieversorgungsmaschine 40 angebracht sind die gekuppelte Bahnbaumaschine mit elektrischer Leistung. Dies geschieht über die Gleichstromzwischenkreisschiene 48, die mit den bei elektrischen Eisenbahnfahrzeugen typischen Spannungen von 600 oder 750VDC betrieben wird. Damit können übliche Industrieprodukte für die 4-Quadrantensteller, die Traktionswechselrichter etc. verwendet werden.

Bei Vorhandensein einer elektrischen Oberleitung 39 wird über einen Stromabnehmer 38 die Versorgungsspannung abgegriffen und über einen Hauptschalter und Gebührenzähler 37 dem Hochspannungstransformator zugeführt, wenn es sich um Wechselspannungsnetze 15kV oder 25kV handelt. Die Anpassung erfolgt über eine geteilte Wicklung des Trafos. Liegt eine mit Gleichspannung betriebene Oberleitung O vor, dann kann der Trafo und die Wandlung in einen Gleichstromzwischenkreis übergangen werden. Damit kann die Leistungsversorgungsmaschine für verschiedene Oberleitungssysteme flexibel ausgeführt werden. Über einen 4-Quadrantensteller 35 wird der Gleichstromzwischenkreis versorgt. Er erlaubt auch die Rückspeisung von Strom in das Bahnnetz 39, wenn die Maschine gebremst wird, denn dann wirken die Drehstrom-Asynchronmotoren 27 als Generatoren. Der Antrieb der Maschine erfolgt über Traktionswechselrichter 28 die aus der Gleichspannung Drehstrom erzeugen. Die Antriebsmotoren 27 sind mechanisch mit den Achsgetrieben 13 verbunden. Die Antriebsleistung der Energieversorgungsmaschine 40 wird so hoch ausgelegt, dass die hydrostatischen oder hydrodynamischen Fahrantriebe 13, 16 oder 26 der Hauptmaschine außer Betrieb genommen werden können. Das hat den Vorteil eines erheblich besseren Wirkungsgrades. Eine Hydraulikpumpe hat einen Wirkungsgrad von etwa 0,91, des Hydraulikmotors von 0,9 und der des Verteilgetriebes von 0,97. Die Wirkungsgrade multiplizieren sich, das bedeutet einen Gesamtwirkungsgrad der Antriebskette von etwa 0,79. Elektrische Antriebe hingegen weisen Wirkungsgrade in der Größenordnung 0,96-0,98 auf. Damit ergibt sich alleine durch die Anwendung elektrischer Antriebsleistung eine Einsparung von beinahe 20%. Natürlich erlaubt das System auch die Beibehaltung der vorhandenen Antriebe der schon länger im Einsatz befindlichen Maschine. Im Falle des Neubaus einer Oberbaumaschine wird das Konzept des Leistungsversorgungsteils eingeplant. Dann werden grundsätzlich nur elektrische Fahrantriebe 27, 28 eingebaut. Der Arbeitshydraulikkreis wird ebenfalls über einen Elektromotor 41 mit Pumpe P, insbesondere einer Hydraulikpumpe 42, versorgt. Das Verteilgetriebe kann entfallen.

An den Gleichstromzwischenkreis wird ein Akkumulator 34 neuester Technologie (z.B. Lithium-Ionen-Polymer) angeschlossen, der kurzfristige Spannungseinbrüche infolge unregelmäßiger Belastung der Bahnbaumaschine 1 beim Arbeiten (z.B. Stopfen) abdeckt. Der Akku 34 erlaubt auch den kurzzeitigen Betrieb der Maschine ohne Oberleitung O. Parallel zur Gleichstromzwischenkreisschiene 48 des Gleichstromzwischenkreises können auch Superkondensatoren 33 geschaltet werden. Diese sind imstande schnelle Belastungsspitzen auszugleichen. Über einen Wechselrichter 31 kann zusätzlich eine 380/220VAC- Drehstromschiene 49 aufgebaut werden. Mit der Wechselspannung können übliche Verbraucher der Hauptmaschine 1 und des Anhängers wie Klimaanlagen, elektrisch betriebene Luftkompressoren, Computer etc. versorgt werden.

Damit die Bahnbaumaschine 1 mit der Energieversorgungsmaschine 40 kommunizieren kann ist eine Steuerleitung 47 zwischen den Steuerungen 32, 46 der Maschinenteile erforderlich. Damit kann z. B. die Energieversorgungsmaschine 40 mit bzw. über den Führerstand der Bahnbaumaschine 1 betrieben werden. Über Steuerleitungen 47 werden die Antriebsleistungen und die Versorgung diverser Verbraucher koordiniert.

Falls keine Oberleitung vorhanden ist oder diese in einer Baustelle abgeschaltet wird, dann muss sich die Maschine selbst versorgen. Die vorhandenen Batterien sind für die üblichen längeren Betriebszeiten nicht geeignet. Deshalb kann die Energieversorgungsmaschine 40 mit einem Powerpack, bestehend aus Dieselmotor 10 und Elektrogenerator 30, ausgestattet werden. Über einen Leistungsstromrichter 29 speist der Generator dann in die Gleichstromzwischenkreisschiene 48 des Gleichstromzwischenkreises ein. Vorteilhaft ist erfindungsgemäß, dass die Energieversorgungsmaschine 40 mit geringen Anpassungen an die jeweils zu betreibende Bahnbaumaschine, herstellerunabhängig, angeschlossen werden kann. Der Ersatz eines Dieselmotors 10 einer Bahnbaumaschine durch einen Elektromotor 12 und der Einbau einer Gleichstromzwischenkreisschiene ist von Gewicht und Bauraum her immer möglich, unabhängig von Hersteller der Bahnbaumaschine.

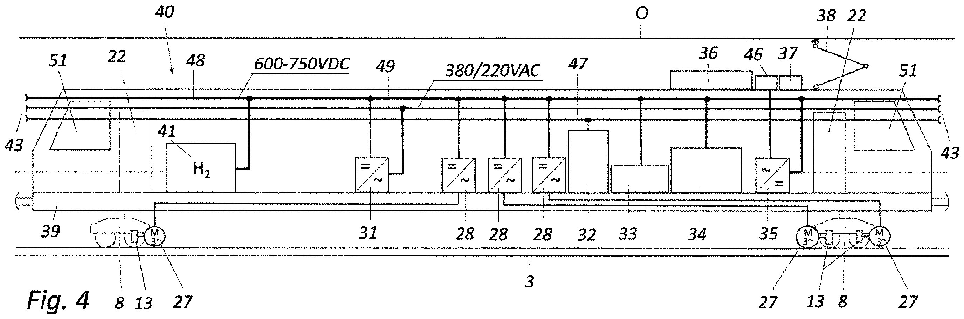

In Fig. 4 wird das modulare Konzept durch den Einsatz von Brennstoffzellen 41 auf Wasserstoffbasis gezeigt. Die Brennstoffzellen 41 speisen direkt in die Gleichstromzwischenkreisschiene 48 ein. Über entsprechend große Wasserstofftanks auf dem Versorgungsteil können lange Betriebszeiten über mehrere Schichten hinweg gewährleistet werden.
Auch der Aufbau eines Wasserstoffmotors an Stelle des Dieselmotors 10 ist möglich.

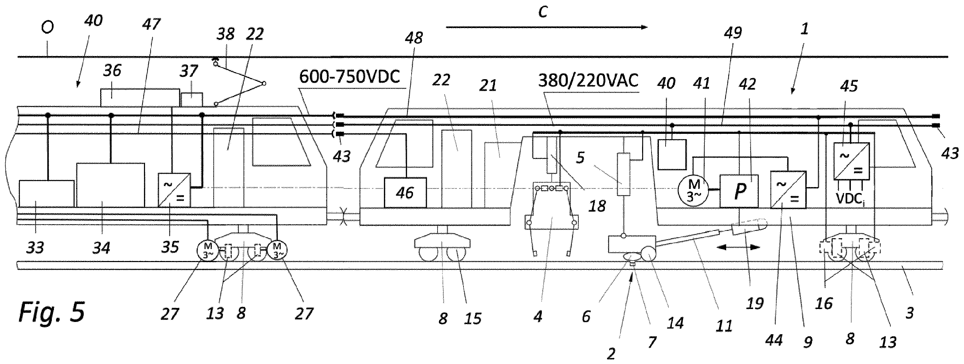

Fig. 5 zeigt eine erfindungsgemäße Kopplung der Energieversorgungsmaschine 40 mit einer einzelnen Bahnbaumaschine 1. Ob die Energieversorgungsmaschine 40 vorne oder hinten ankuppelt ist nicht entscheidend. Der Bahnbaumaschine 1 wird die Energie in Form des Gleichstromzwischenkreises und der 380/220VAC Wechselspannung zugeführt. Der Dieselmotor 10 auf der alten Oberbaumaschine 1 wird ausgebaut und an seiner Stelle ein Wechselrichter 44 mit angeschlossenem Drehstrommotor 41 aufgebaut. Dieser treibt die Hydraulikpumpe 42 um einen Hydraulikarbeitskreis P zu versorgen. Der vorhandene hydrostatische Antrieb 13, 16 sollte aus Energieeffizienzgründen entfallen. Über einen AC/DC-Wandler 45 können verschiedene Hilfsgleichspannungen VDCi für das Steuersystem erzeugt werden (z.B. 24VDC). Über die gekoppelte (Kupplungen 43) Steuerleitung 47 kommunizieren die Steuergeräte 46, 32 beider Maschinenteile. Für die Bahnbaumaschine ist es unerheblich woher der Gleichstromzwischenkreis seine Energie bezieht. Es ist unerheblich ob diese über die Akkumulatoren 33, die Oberleitung O, Brennstoffzellen 41, dieselelektrisch 10, 29, 30 oder Wasserstoffmotor-elektrisch erzeugt wird.

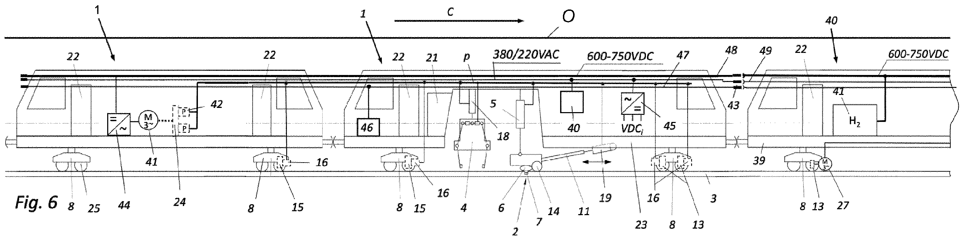

Fig. 6 beschreibt erfindungsgemäß die Kopplung der Energieversorgungsmaschine 40 mit einer zweiteiligen Arbeitsmaschine 1. Der Gleichstromzwischenkreis und der Starkstromkreis 49 sind als durchgehende Sammelschiene auf allen Maschinenteilen zu finden. Über eine Steuerleitung 47 kommunizieren die Steuercomputer 46, 32 der Maschinenteile. Der Hydraulikkreis der die Arbeitsaggregate 18, 5, 19 und die hydrostatischen Fahrantriebe 13, 15, 16 der Maschineteile versorgt befindet sich auf dem Anhänger. Beim Umbau alter Maschinen auf nachhaltige Versorgungsysteme, wird der Dieselmotor 10 ausgebaut und an seiner Stelle ein über einen Wechselrichter 44 betriebener Elektromotor 41 aufgebaut. Dieser treibt nun das Verteilgetriebe 24 an. Energietechnisch ist es wegen des schlechten Wirkungsgrades günstig die hydrostatischen Antriebe 13, 15, 16 abzubauen und die Antriebsleistung vom Energieversorgungsmaschine 40 zu beziehen. Bei Neumaschinen können elektrische Antriebe 27 über Traktionsumformer 28 die direkt am Gleichstromzwischenkreis angeschlossen werden, an den Achsen der Neumaschine aufgebaut werden. Vorteilhaft ist dabei die einfache Energiezufuhr, der hohe Wirkungsgrad und die Verteilung über den Gleichstromzwischenkreis.

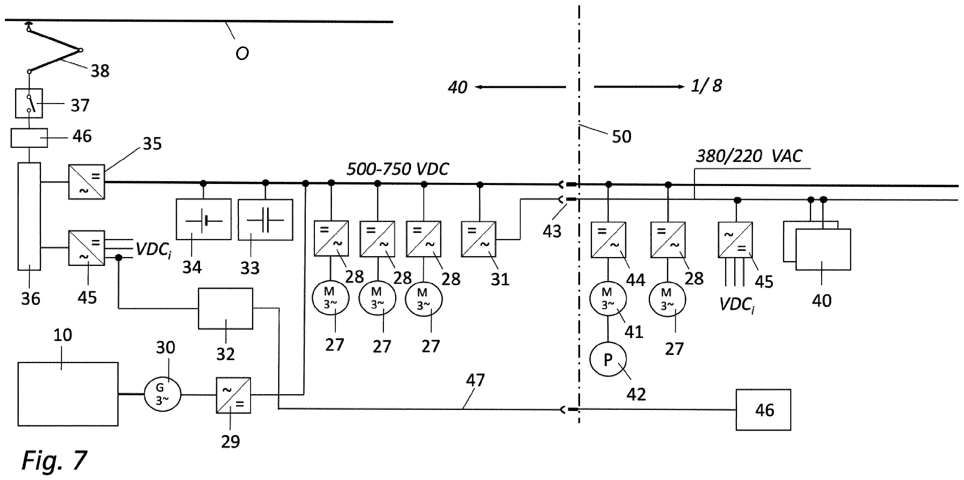

Fig. 7 zeigt schematisch den Aufbau der Elektroanlage. Die Energie für die Antriebe 27 und Arbeitsaggregate wird dabei elektrisch über eine Gleichstromzwischenkreisschiene 48 zur Verfügung gestellt. Die in der Eisenbahnindustrie üblichen Zwischenkreisspannungen liegen dabei typisch zwischen 600 und 750VDC. Erfindungsgemäß wird über einen Stromabnehmer 38 von der Oberleitung O die Energie bezogen. Die Spannung wird über einen Hauptschalter 37, einen Gebührenzähler 46 dem Hochspannungstransformator 36 zugeführt. Sekundärseitig wird zum Beispiel ein 4-Quadrantensteller 35 versorgt der den Gleichstromzwischenkreis aufbaut. An diesen angeschlossen sind ein Energiespeicher (z.B. Lithium-Ionen-Polymer Akku) 34, oder optional eine Superkondensatoreinheit 33. Der Akku 34 und die Super-Caps 33 können kurzfristig für die Energieversorgung aufkommen. Sie dienen auch zur Pufferung schnell wechselnder Lastanforderungen, wie sie beispielsweise bei Stopfmaschinen durch das ständige Anfahren-Bremsen-Stopfen von Schwelle zu Schwelle auftreten. Falls keine Oberleitung O vorhanden ist, dann wird die Energie über die Kette Dieselmotor 10, Stromgenerator 30 und Hochstromwechselrichter 29 erzeugt. Statt des Dieselmotors kann auch ein Wasserstoffverbrennungsmotor eingesetzt werden. Über Traktionswechselrichter 28 werden Elektromotoren 27 die auf Triebachsen wirken betrieben. So wird die Fahrleistung zur Verfügung gestellt. Über einen eigenen Wechselrichter 31 wird eine Drehstromleitungsschiene 49 zur Verfügung gestellt. Über Kupplungen 43 werden die Stromschienen 48, 49 und die Kommunikationsleitung 46 an die anderen Maschinenteile übertragen. Auf den Arbeitsmaschinen 1, 8 können über Traktionsumrichter 28 und Antriebsmotoren 27 eigene Achsen angetrieben werden. Die Hydraulikversorgung für die Arbeitsaggregate wird über die Antriebskette Wechselrichter 44 Drehstrommotor 41 und Hydraulikpumpe 42 sichergestellt. Über eigene AC/DC-Umformer 45 werden verschiedene Hilfsspannungen VDCi (wie z.B. die Bordspannung 24VDC) erzeugt. Am Drehstromnetz können typische Verbraucher wie Klimaanlagen, Computer angeschlossen und betrieben werden. Die Maschinensteuerungen 32, 46 kommunizieren über eigene Steuerleitungen 47. Mit diesen kommunizieren die Führerstände, zudem werden die Antriebe abgestimmt. 50 stellt symbolisch die Systemgrenze zwischen Energieversorgungsmaschine 40 und Bahnbaumaschine 1 dar.

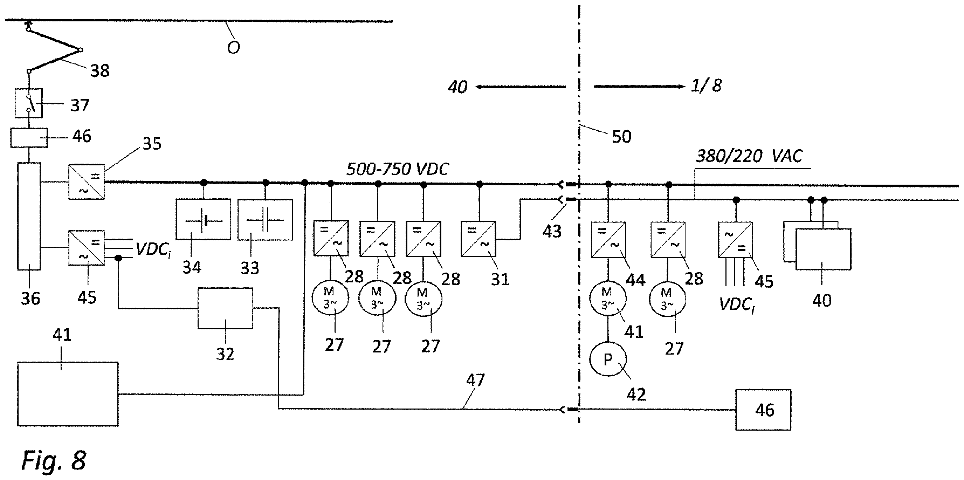

Fig. 8 zeigt schematisch den Aufbau der Elektroanlage, wenn statt des Dieselmotors 10 als ergänzender Energiebereitstellung diese durch Brennstoffzellen 41 bewerkstelligt wird. Diese können direkt in den Gleichstromzwischenkreis einspeisen. Über den 4-Quadranten-Steller 35 kann Leistung auch ans Oberleitungsnetz O zurückgegeben werden. Dies ist dann der Fall, wenn die Antriebsmotoren 27 bei Bremsvorgängen oder bei Talfahrten im Generatorbetrieb arbeiten.

## Patentansprüche

1. Gleisfahrbare, selbstfahrende Energieversorgungsmaschine (40) zum Versorgen von gleisfahrbaren Bahnbaumaschinen (1) mit Energie, umfassend einen auf Schienenfahrwerken (8) abgestützten, wenigstens eine Energiequelle tragenden Maschinenrahmen (39), der mit wenigstens einer zwischen beiden Energieversorgungsmaschinenenden verlaufenden Gleichstromzwischenkreisschiene (48) ausgestattet ist, die zwecks Aufbaus eines Gleichstromzwischenkreises über einen Stromabnehmer (38) an ein Oberleitungsnetz (O) anschließbar ist und an welche Gleichstromzwischenkreisschiene (48) die Energiequelle angeschlossen ist, **gekennzeichnet durch** eine an die Energieversorgungsmaschine (40) gekuppelte gleisfahrbare Bahnbaumaschine (1), die ebenfalls mit wenigstens einer zwischen beiden Bahnbaumaschinenenden verlaufenden Gleichstromzwischenkreisschiene (48) ausgestattet ist, wobei die Gleichstromzwischenkreisschiene (48) von Energieversorgungsmaschine (40) und Bahnbaumaschinen (1) über elektrische Kupplungen aneinander angeschlossen sind, wobei ein Arbeitshydraulikkreis (P) der Bahnbaumaschine (1) einen Elektromotor (41) mit Pumpe, insbesondere eine Hydraulikpumpe (42), umfasst und wobei die Energieversorgungsmaschine (40) die Bahnbaumaschine (1) im Zuge von Bahnbauarbeiten vollständig mit Energie versorgt und diese betreibt.

2. Gleisfahrbare Energieversorgungsmaschine (40) nach Anspruch 1, **dadurch gekennzeichnet, dass** in der Stromleitung zwischen Stromabnehmer (38) und Gleichstromzwischenkreisschiene (48) ein Pantograph (38), ein Hauptschalter (37), ein Gebührenzähler (46) ein Transformator (36) und ein Hochstromwechselrichter (35) vorgesehen sind.

3. Gleisfahrbare Energieversorgungsmaschine (40) nach Anspruch 2, **dadurch gekennzeichnet, dass** der Hochstromwechselrichter (35) als 4-Quadrantensteller ausgeführt ist.

4. Gleisfahrbare Energieversorgungsmaschine (40) nach einem der Ansprüche 1 bis 3, **dadurch gekennzeichnet, dass** Fahrantriebe von Energieversorgungsmaschine (40) und/oder Bahnbaumaschine (1) umfassend Traktionsumrichter (28) und Elektromotoren (27), die vorzugsweise direkt in Achsgetriebe (13) eintreiben, an die jeweils zugeordnete Gleichstromzwischenkreisschiene (48) angeschlossen sind.

5. Gleisfahrbare Energieversorgungsmaschine (40) nach einem der Ansprüche 1 bis 4, **dadurch gekennzeichnet, dass** an die Gleichstromzwischenkreisschiene (48) ein elektrischer Energiespeicher (34) angeschlossen ist.

6. Gleisfahrbare Energieversorgungsmaschine (40) nach einem der Ansprüche 1 bis 5, **dadurch gekennzeichnet, dass** an die Gleichstromzwischenkreisschiene (48) mindestens ein Superkondensator (33) angeschlossen ist.

7. Gleisfahrbare Energieversorgungsmaschine (40) nach einem der Ansprüche 1 bis 6, **dadurch gekennzeichnet, dass** über der Energieversorgungsmaschine (40) und/oder der Bahnbaumaschine (1) zugeordnete und an die jeweils zugeordnete Gleichstromzwischenkreisschiene (48) angeschlossene Wechselrichter (31) ein Drehstromanschluss bereitgestellt ist, an den Verbraucher angeschlossen sind.

8. Gleisfahrbare Energieversorgungsmaschine (40) nach einem der Ansprüche 1 bis 7, **dadurch gekennzeichnet, dass** an die Gleichstromzwischenkreisschiene (48) der Bahnbaumaschine (1) ein über einen Wechselrichter (44) angetriebener Drehstrommotor (41) angeschlossen ist, der mindestens eine Hydraulikpumpe (42) zur Versorgung der Bahnbaumaschine (1) mit Hydraulikdruck umfasst.

9. Gleisfahrbare Energieversorgungsmaschine (40) nach einem der Ansprüche 1 bis 8, **dadurch gekennzeichnet, dass** die Energiequelle einen Dieselmotor (10) und einen Elektrogenerator (30) umfasst, der über einen Hochstromwechselrichter (29) an die Gleichstromzwischenkreisschiene (48) angeschlossen ist.

10. Gleisfahrbare Energieversorgungsmaschine (40) nach einem der Ansprüche 1 bis 9, **dadurch gekennzeichnet, dass** die Energiequelle einen Wasserstoffverbrennungsmotor und einen Elektrogenerator (30) umfasst, der über einen Hochstromwechselrichter (29) an die Gleichstromzwischenkreisschiene (48) angeschlossen ist.

11. Gleisfahrbare Energieversorgungsmaschine (40) nach einem der Ansprüche 1 bis 10, **dadurch gekennzeichnet, dass** die Energiequelle Wasserstoffbrennstoffzellen (41) umfasst, die an die Gleichstromzwischenkreisschiene (48) angeschlossen sind.

12. Gleisfahrbare Energieversorgungsmaschine (40) nach einem der Ansprüche 1 bis 11, **dadurch gekennzeichnet, dass** Steuerungscomputer (46, 47) von Energieversorgungsmaschine (40) und Bahnbaumaschine (1) zur gegenseitigen Kommunikation über eine Kommunikationsleitung (47) aneinander angeschlossen sind, um Antriebe (41, 27) und Energieversorgung (10, 41, 35, 37) abzugleichen.

13. Gleisfahrbare Energieversorgungsmaschine (40) nach einem der Ansprüche 1 bis 12, **dadurch gekennzeichnet, dass** an die Gleichstromzwischenkreisschiene (48) von Energieversorgungsmaschine (40) und/oder Bahnbaumaschine (1) Wechselrichter (45) zur Erzeugung von Hilfsgleichspannungen (VDCᵢ) angeschlossen sind.

14. Gleisfahrbare Energieversorgungsmaschine (40) nach Anspruch 1 bis 13, **dadurch gekennzeichnet, dass** zum elektrischen Anschluss von Verbrauchern zwischen beiden Energieversorgungsmaschinenenden und beiden Bahnbaumaschinenenden je wenigstens eine Drehstromschiene (49) verläuft, die über elektrische Kupplungen aneinander angeschlossen sind.

15. Gleisfahrbare Energieversorgungsmaschine (40) nach einem der Ansprüche 1 bis 14, **dadurch gekennzeichnet, dass** dieses eine vordere und eine hintere Fahrkabine (51) aufweist und als Zugfahrzeug in beide Richtungen fahrend betreibbar ist.

16. Gleisfahrbare Energieversorgungsmaschine (40) nach einem der vorhergehenden Ansprüche, **dadurch gekennzeichnet, dass** die Gleichstromzwischenkreisschiene (48), die Drehstromschiene (49) und die Kommunikationsleitungen (47) von Energieversorgungsmaschine (40) und Bahnbaumaschine (1) über Kupplungen (43) aneinander angeschlossen sind.

17. Gleisfahrbare Energieversorgungsmaschine (40) nach einem der Ansprüche 1 bis 16, **dadurch gekennzeichnet, dass** diese mit einem inertialen Messsystem und/oder einem gleisfahrbaren Messwagen ausgestattet ist.

18. Gleisfahrbare Energieversorgungsmaschine (40) nach einem der Ansprüche 1 bis 17, **dadurch gekennzeichnet, dass** die gleisfahrbare Energieversorgungsmaschine (40) mit einem ETCS-System ausgestattet ist.
